# EUROPÄISCHE PATENTANMELDUNG

(11) **EP 2 119 594 A1**
(43) Veröffentlichungstag der Anmeldung: **18.11.2009**
(21) Anmeldenummer: 08156155.7
(22) Anmeldetag: 14.05.2008
(51) Int. Cl.: B60Q 1/14

(54) **Steuergerät zum Einstellen der horizontalen und/oder vertikalen Hell-Dunkel-Grenze**

(71) Anmelder: Hella KGaA Hueck & Co., 59552 Lippstadt (DE)
(72) Erfinder: Pollert, Markus, 61476 Kronberg (DE)
(74) Vertreter: Downar, Michael

(57) **Zusammenfassung**

Die vorliegende Erfindung betrifft ein Steuergerät für ein Kraftfahrzeug (1) zum Einstellen der horizontalen Hell-Dunkel-Grenze von Hauptscheinwerfern bei vorausfahrenden und/oder entgegenkommenden Fahrzeugen (2) mit wenigstens einer ersten Schnittstelle zur Verbindung mit wenigstens einem Mittel zur Erkennung von vorausfahrende und/oder entgegenkommenden Fahrzeugen (2), mit wenigstens einer zweiten Schnittstelle zur Verbindung mit wenigstens einem Hauptscheinwerfer, wobei das Steuergerät geeignet und eingerichtet ist Informationen über die Entfernung des Kraftfahrzeugs (1) zu den vorausfahrenden und/oder entgegenkommenden Fahrzeugen (2) über die erste Schnittstelle einzulesen oder aus über die erste Schnittstelle eingelesenen Informationen zu ermitteln, wobei das Steuergerät geeignet und eingerichtet ist in Abhängigkeit von der Entfernung Steuersignale für die Hauptscheinwerfer zum Einstellen der horizontale Hell-Dunkel-Grenze zu erzeugen und an der zweiten Schnittstelle bereitzustellen, wobei das Steuergerät geeignet und eingerichtet ist Informationen über eine Höhendifferenz oder einen Höhenwinkel zwischen der Fahrtrichtung des Kraftfahrzeugs (1) und den vorausfahrenden und/oder entgegenkommenden Fahrzeugen (2) einzulesen oder aus eingelesenen Informationen zu ermitteln, dass das Steuergerät geeignet und eingerichtet ist, die Steuersignale für die Hauptscheinwerfer zum Einstellen der horizontale Hell-Dunkel-Grenze auch in Abhängigkeit der Höhendifferenz oder dem Höhewinkel zu erzeugen, dass bei einer Höhendifferenz oder bei einem Höhenwinkel ungleich Null die Steuersignale gegenüber den Steuersignalen bei einer Höhendifferenz oder bei einem Höhenwinkel gleich Null verändert sind.

## Beschreibung

Die Erfindung betrifft ein Steuergerät für ein Kraftfahrzeug zum Einstellen der horizontalen Hell-Dunkel-Grenze von Hauptscheinwerfern des Kraftfahrzeugs bei vorausfahrenden und/oder entgegenkommenden Fahrzeugen.

Ein bekanntes gattungsgemäßes Steuergerät weist wenigstens eine erste Schnittstelle auf, mit dem es mit wenigstens einem Mittel zum Erkennen von vorausfahrenden und/oder entgegenkommenden Fahrzeugen verbunden werden kann. Eine zweite Schnittstelle des Steuergeräts dient der Verbindung mit wenigstens einem Hauptscheinwerfer. Das Steuergerät ist geeignet und eingerichtet, Informationen über die Entfernung des Kraftfahrzeugs zu dem vorausfahrenden und/oder entgegenkommenden Fahrzeugen über die erste Schnittstelle einzulesen oder aus Informationen zu ermitteln, die über die erste Schnittstelle eingelesenen wurden. Das Steuergerät ist ferner geeignet und eingerichtet in Abhängigkeit von der Entfernung zwischen dem Kraftfahrzeug und den vorausfahrenden und/oder entgegenkommenden Fahrzeugen Steuersignale für die Hauptscheinwerfer zu erzeugen. Mittels der Steuersignale kann die horizontale Hell-Dunkel-Grenze der Hauptscheinwerfer eingestellt werden. Die Steuersignale werden an der zweiten Schnittstelle bereitgestellt.

Ein solches Steuergerät wird von der Anmelderin hergestellt und vertrieben. Die Anmelderin hat außerdem Patentanmeldungen eingereicht, die solche Steuergeräte offenbaren. Beleuchtungseinrichtungen von Kraftfahrzeugen mit solchen Steuergeräten haben den Vorteil, dass die horizontale Hell-Dunkel-Grenze und damit die Leuchtweite automatisch angepasst werden können. Sobald Gegenverkehr auftritt, oder dem Kraftfahrzeug Fahrzeuge vorausfahren, wird die Hell-Dunkel-Grenze verschoben, um eine Blendung des Gegenverkehrs oder der vorausfahrenden Verkehrs zu vermeiden. Fehlt es an entgegenkommendem Verkehr oder vorausfahrendem Verkehr, kann dagegen die Hell-Dunkel-Grenze angehoben und damit die Leuchtweite verlängert werden, um eine weitere Ausleuchtung des Verkehrsraums vor dem Kraftfahrzeug zu erreichen. Die automatische Adaptierung der Horizontalen Hell-Dunkel-Grenze (aHDG) ist für verschiedene Lichtverteilungen möglich. Steuergeräte der Anmelderin sind beispielsweise dazu eingerichtet, die horizontale Hell-Dunkel-Grenze sowohl bei den Lichtverteilungen "Stadtverkehr", "Landstraßenlicht", "Autobahnlicht" und anderen Lichtverteilungen automatisch einzustellen.

Der Nachteil der bekannten Steuergeräte für ein automatisches Einstellen der horizontalen Hell-Dunkel-Grenze besteht darin, dass diese für ebenes Gelände optimiert sind. In hügeligem oder welligem Gelände kommt es dagegen entweder zu Sichtweitendefiziten oder zu unnötigen Blendungen. Die vertikale Ausrichtung der Scheinwerfer wird bezogen auf die Ebene des Fahrzeugs bzw. auf die Fahrtrichtung berechnet. Befindet sich in einem hügligen oder welligen Gelände dagegen ein Fahrzeug oberhalb des Kraftfahrzeugs, d. h. es liegt eine positive Höhendifferenz zwischen dem Kraftfahrzeug und dem entgegenkommenden Fahrzeug vor, wird die Hell-Dunkel-Grenze weiter abgesenkt als es notwendig ist. Befindet sich dagegen das entgegenkommende Fahrzeug unterhalb des eigenen Kraftfahrzeugs, d. h. es liegt eine negative Höhendifferenz vor, besteht die Gefahr, dass die Hell-Dunkel-Grenze zu weit angehoben ist und der Gegenverkehr geblendet wird.

Der Erfindung liegt das Problem zugrunde, ein Steuergerät für das Einstellen der horizontalen Hell-Dunkel-Grenze von Hauptscheinwerfern eines Kraftfahrzeugs so zu verbessern, dass auch in hügeligem oder welligem Gelände stets eine optimale Ausleuchtung des Verkehrsraums durch die Hauptscheinwerfer gegeben ist und eine unnötige Blendung des vorausfahrenden oder entgegenkommenden Verkehrs vermieden wird.

Diese Aufgabe wird erfindungsgemäß dadurch gelöst, dass das Steuergerät geeignet und eingerichtet ist, Informationen über eine Höhendifferenz oder einen Höhenwinkel zwischen der Fahrtrichtung des Kraftfahrzeugs und den vorausfahrenden und/oder entgegenkommenden Fahrzeugen einzulesen oder aus eingelesenen Informationen zu übermitteln. Das Steuergerät ist ferner geeignet und eingerichtet, die Steuersignale für die Hauptscheinwerfer zum Einstellen der horizontalen Hell-Dunkel-Grenze auch in Abhängigkeit der Höhendifferenz oder dem Höhenwinkel zu erzeugen. Die Steuersignale zum Einstellen der horizontalen Hell-Dunkel-Grenze sind dann bei einer Höhendifferenz oder einem Höhenwinkel ungleich Null gegenüber den Steuersignalen bei einer Höhendifferenz oder einem Höhenwinkel gleich Null verändert.

Aus der Druckschrift mit der Veröffentlichungsnummer US 2003/0137849 A1 und der Offenlegungsschrift DE 10 2006 016 071 A1 sind Beleuchtungsanlagen für Kraftfahrzeuge bekannt, bei denen die Leuchtweite in Abhängigkeit vom Gelände verringert oder erhöht wird. Dazu werden über ein Sensorsystem Informationen über den Höhenverlauf des vor dem Fahrzeug liegenden Verkehrsraums eingelesen. Erkennt das Sensorsystem bzw. ein mit den Sensoren verbundenes Steuergerät im Verkehrsraum vor dem Kraftfahrzeug eine Kuppe oder eine Senke, wird der Scheinwerfer so angesteuert, dass die Leuchtweite erhöht oder herabgesetzt wird, um entweder eine Blendung des Gegenverkehrs oder vorausfahrenden Verkehrs zu vermeiden oder aber die Ausleuchtung des Verkehrsraums vor dem Kraftfahrzeug zu verbessern. Nach der in den beiden Druckschriften offenbarten Technik, wird die Leuchtweite eingestellt, ohne dass dabei berücksichtigt wird, ob tatsächlich im Verkehrsraum vor dem Kraftfahrzeug andere Verkehrsteilnehmer sind. Die Leuchtweite wird verändert unabhängig davon, ob vor dem Kraftfahrzeug entgegenkommende oder vorausfahrende Fahrzeuge fahren. Es ist daher möglich, dass die Leuchtweite nicht optimal an die Verkehrssituation angepasst ist. Insbesondere wird die größtmögliche Leuchtweite unter Umständen nicht erreicht oder aber der Gegenverkehr wegen einer zu hohen Leuchtweite geblendet.

Der erfindungsgemäße Ansatz dagegen nutzt Informationen über den vorausfahrenden oder entgegenkommenden Verkehr. Insbesondere wird die Höhendifferenz zwischen der Fahrtrichtung des eigenen Kraftfahrzeugs und der entgegenkommenden bzw. vorausfahrenden Fahrzeuge ermittelt, um die Hell-Dunkel-Grenze mittels des erfindungsgemäßen Steuergeräts automatisch einzustellen. Die Einstellung erfolgt so, dass eine Blendung der anderen Verkehrsteilnehmer möglichst verhindert und der Verkehrsraum vor dem eigenen Kraftfahrzeug möglichst gut ausgeleuchtet wird.

Gemäß der Erfindung kann bei einer größeren Höhe der Fahrtrichtung des Kraftfahrzeugs gegenüber der Höhe der vorausfahrenden und/oder entgegenkommenden Fahrzeuge, d. h. bei einer Höhendifferenz oder einem Höhenwinkel größer als Null, das Steuergerät Steuersignale für die Hauptscheinwerfer zum Einstellen der horizontalen Hell-Dunkel-Grenze bereitstellen, die die Hauptscheinwerfer zum Absenken der horizontalen Hell-Dunkel-Grenze gegenüber einer Position ansteuern, die die Hell-Dunkel-Grenze hat, wenn die Höhendifferenz oder der Höhenwinkel gleich Null sind.

Umgekehrt verhält es sich bei einer kleineren Höhe der Fahrtrichtung des Kraftfahrzeugs gegenüber der Höhe der vorausfahrenden und/oder entgegenkommenden Fahrzeuge. In einem solchen Fall ist die Höhendifferenz oder der Höhenwinkel kleiner als Null. Das Steuergerät der erfindungsgemäßen Art kann dann Steuersignale für die Hauptscheinwerfer zum Einstellen der horizontalen Hell-Dunkel-Grenze an der zweiten Schnittstelle bereitstellen, die zu einem Anheben der vertikalen Hell-Dunkel-Grenze führen. Die horizontale Hell-Dunkel-Grenze wird dann gegenüber einer Position angehoben, die die horizontale Hell-Dunkel-Grenze hat, wenn die Höhendifferenz bzw. der Höhenwinkel gleich Null ist.

Gemäß der Erfindung kann das Steuergerät geeignet und eingerichtet sein, Informationen über die Geschwindigkeit des eigenen Kraftfahrzeugs einzulesen oder aus eingelesenen Informationen diese Geschwindigkeit zu ermitteln. In Abhängigkeit von der Geschwindigkeit des eigenen Kraftfahrzeugs kann das Steuergerät dann Steuersignale für die Hauptscheinwerfer zum Einstellen der horizontalen Hell-Dunkel-Grenze erzeugen. Diese Steuersignale können dann an der zweiten Schnittstelle bereitgestellt werden.

Ebenso ist es möglich, dass das Steuergerät Informationen über die Geschwindigkeit der anderen Verkehrsteilnehmer, d. h. insbesondere der vorausfahren und/oder entgegenkommenden Fahrzeuge einliest oder aus eingelesenen Informationen diese Geschwindigkeiten ermittelt. In Abhängigkeit von der Geschwindigkeit der vorausfahrenden und/oder entgegenkommenden Fahrzeuge können dann die Steuersignale für die Hauptscheinwerfer erzeugt werden. Diese Steuersignale für die Hauptscheinwerfer zum Einstellen der horizontalen Hell-Dunkel-Grenze können dann an der zweiten Schnittstelle des Steuergeräts bereitgestellt werden.

Ebenso kann das Steuergerät geeignet und eingerichtet sein, Informationen über einen horizontalen Versatz der vorausfahrenden und/oder entgegenkommenden Fahrzeuge gegenüber der Fahrtrichtung des Kraftfahrzeugs einzulesen oder aus eingelesenen Informationen zu ermitteln. Die Informationen über den horizontalen Versatz können beispielsweise in einer Winkelangabe oder in einer Distanzangabe bestehen. In Abhängigkeit von dem horizontalen Versatz kann dann das Steuergerät Steuersignale für den Hauptscheinwerfer zum Einstellen der horizontalen Hell-Dunkel-Grenze erzeugen. Die Steuersignale werden dann ebenso an der zweiten Schnittstelle bereitgestellt.

Das erfindungsgemäße Steuergerät kann einen Speicher aufweisen. In dem Speicher können Kennlinien oder Kennfelder abgelegt sein. Die Werte für die Steuersignale können mittels der Kennlinien und Kennfelder aus den verschiedenen Größen, insbesondere der Höhendifferenz oder den Höhenwinkel ermittelt werden.

Das Steuergerät kann ferner geeignet und eingerichtet sein, Informationen über die aktuellen Einstellungen der Hauptscheinwerfer einzulesen. Zu den aktuellen Einstelllungen können insbesondere auch die eingestellten Lichtverteilungen gehören.

Ein erfindungsgemäßes Steuergerät kann alternativ zur Ermittlung der Werte für die Steuersignale mittels von Kennlinien oder Kennfeldern zur Berechnung der Werte geeignet und eingerichtet sein. Die Werte für die Steuersignale können dann aus den eingelesenen oder ermittelten Werten für die Höhendifferenz oder den Höhenwinkel unter Berücksichtigung der Geschwindigkeit des Kraftfahrzeugs, der Geschwindigkeiten der vorausfahrenden und/oder entgegenkommenden Fahrzeuge, des horizontalen Versatzes und/oder der aktuellen Einstellungen und ggf. weiterer Größen berechnet werden.

Die Werte können insbesondere auch in Abhängigkeit von der eingestellten Lichtverteilung berechnet oder mittels der Kennlinien bzw. Kennfelder ermittelt werden.

Ein erfindungsgemäßes Steuergerät kann geeignet und eingerichtet sein, dass mit den von ihm erzeugten Steuersignalen Werte für die Leistung, die Ausrichtung, die Leuchtmittel, Blenden, die Ausrichtung von Spiegeln, Linsen oder anderem der Hauptscheinwerfer zum Einstellen der horizontalen Hell-Dunkel-Grenze an der zweiten Schnittstelle bereitzustellen.

Anhand der beigefügten Zeichnungen wird die Erfindung nachfolgend näher erläutert. Dabei zeigt:
- Fig. 1: die Situation mit einem Kraftfahrzeug mit erfindungsgemäßem Steuergerät in einer Senke und
- Fig. 2: die Situation eines Kraftfahrzeugs mit erfindungsgemäßem Steuergerät auf einer Kuppe.

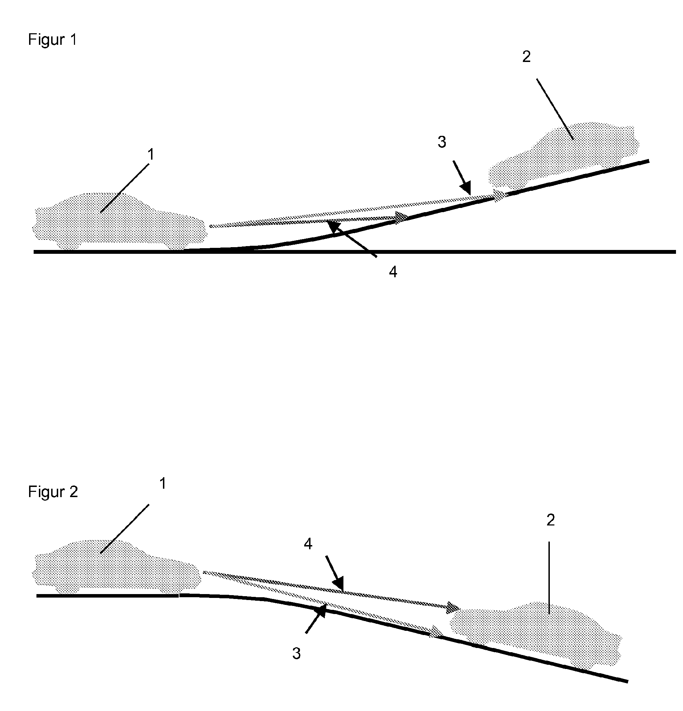

In den Figuren 1 und 2 sind gleiche Bezugszeichen mit für Gleiches verwendet worden.

Das Bezugszeichen 1 bezeichnet ein Kraftfahrzeug, das mit einem erfindungsgemäßem Steuergerät für die Hauptscheinwerfer ausgestattet ist. Bei dem Fahrzeug, das mit dem Bezugszeichen 2 bezeichnet ist, handelt es sich um ein Fahrzeug, welches dem Kraftfahrzeug 1 entgegenkommt. Das Kraftfahrzeug 1 befindet sich (Fig. 1) in einer Senke am Fuße eines Anstiegs. Das Fahrzeug 2 kommt dem Kraftfahrzeug 1 auf dem der Senke folgenden Anstieg entgegen.

Mit dem Bezugszeichen 4 ist die herkömmliche Ausrichtung der Hauptscheinwerfer angedeutet. Diese berücksichtigt zwar bereits die Topographie des Geländes und ist daher gegenüber der Richtung in einer Ebene angehoben. Nicht berücksichtigt ist dagegen das entgegenkommende Fahrzeug 2. Dieses befindet sich oberhalb des Kraftfahrzeugs 1, weshalb der Fahrzeugführer des entgegenkommenden Fahrzeugs 2 später geblendet wird, als wenn das Fahrzeug in der Ebene dem Kraftfahrzeug 1 entgegenkommt. Mit dem erfindungsgemäßen Steuergerät, wird diese Höhendifferenz berücksichtigt und die Hell-Dunkel-Grenze der Hauptscheinwerfer angehoben. Dadurch wird ohne Blendung des Gegenverkehrs eine bessere Ausleuchtung der Straße erreicht.

Das Kraftfahrzeug 1 in der Darstellung der Figur 2 befindet sich dagegen auf einer Kuppe und das Fahrzeug 2 kommt dem Kraftfahrzeug 1 in einer Gefällestrecke entgegen, die auf die Kuppe folgt. Das erfindungsgemäße Steuergerät des Kraftfahrzeugs 1 berücksichtigt bereits die Topographie nicht jedoch das entgegenkommende Fahrzeug 2 zum Absenken der Hell-Dunkel-Grenze. Das entgegenkommende Fahrzeug 2 ist tiefer als das Kraftfahrzeug 1 und darüber hinaus auch tiefer als ein entgegenkommendes Fahrzeug in einer Ebene. Der Fahrzeugführer des entgegenkommenden Fahrzeugs 2 wird daher geblendet, da die Hell-Dunkel-Grenze nicht hinreichend abgesenkt wird. Mittels des erfindungsgemäßen Steuergeräts wird dies berücksichtigt und die Hell-Dunkel-Grenze wird soweit abgesenkt, dass der Fahrzeugführer des entgegenkommenden Fahrzeugs 2 nicht geblendet wird.

### Bezugszeichenliste

- 1: Kraftfahrzeug
- 2: entgegenkommendes Kraftfahrzeug
- 3: korrigierte Ausrichtung der Hauptscheinwerfer
- 4: herkömmliche Ausrichtung der Hauptscheinwerfer

## Patentansprüche

1. Steuergerät für ein Kraftfahrzeug (1) zum Einstellen der horizontalen Hell-Dunkel-Grenze von Hauptscheinwerfern bei vorausfahrenden und/oder entgegenkommenden Fahrzeugen (2)
- mit wenigstens einer ersten Schnittstelle zur Verbindung mit wenigstens einem Mittel zur Erkennung von vorausfahrenden und/oder entgegenkommenden Fahrzeugen (2),
- mit wenigstens einer zweiten Schnittstelle zur Verbindung mit wenigstens einem Hauptscheinwerfer,
- wobei das Steuergerät geeignet und eingerichtet ist, Informationen über die Entfernung des Kraftfahrzeugs (1) zu den vorausfahrenden und/oder entgegenkommenden Fahrzeugen (2) über die erste Schnittstelle einzulesen oder aus über die erste Schnittstelle eingelesenen Informationen zu ermitteln,
- wobei das Steuergerät geeignet und eingerichtet ist, in Abhängigkeit von der Entfernung Steuersignale für die Hauptscheinwerfer zum Einstellen der horizontale Hell-Dunkel-Grenze zu erzeugen und an der zweiten Schnittstelle bereitzustellen,
**dadurch gekennzeichnet,**
- **dass** das Steuergerät geeignet und eingerichtet ist, Informationen über eine Höhendifferenz oder einen Höhenwinkel zwischen der Fahrtrichtung des Kraftfahrzeugs (1) und den vorausfahrenden und/oder entgegenkommenden Fahrzeugen (2) einzulesen oder aus eingelesenen Informationen zu ermitteln,
- **dass** das Steuergerät geeignet und eingerichtet ist, die Steuersignale für die Hauptscheinwerfer zum Einstellen der horizontale Hell-Dunkel-Grenze auch in Abhängigkeit der Höhendifferenz oder dem Höhewinkel zu erzeugen, so dass bei einer Höhendifferenz oder bei einem Höhenwinkel ungleich Null die Steuersignale gegenüber den Steuersignalen bei einer Höhendifferenz oder bei einem Höhenwinkel gleich Null verändert sind.

2. Steuergerät nach Anspruch 1, **dadurch gekennzeichnet, dass** bei einer größeren Höhe der Fahrtrichtung des Kraftfahrzeugs (1) gegenüber der Höhe der vorausfahrenden und/oder entgegenkommenden Fahrzeuge (2), d.h. bei einer Höhendifferenz oder einem Höhenwinkel größer Null, das Steuergerät Steuersignale für die Hauptscheinwerfer zum Einstellen der horizontalen Hell-Dunkel-Grenze an der zweiten Schnittstelle bereitstellt, die die Hauptscheinwerfer zum Absenken der horizontalen Hell-Dunkel-Grenze gegenüber einer Position der Hell-Dunkel-Grenze bei einer Höhendifferenz oder einem Höhenwinkel gleich Null ansteuern.

3. Steuergerät nach Anspruch 1 oder 2, **dadurch gekennzeichnet, dass** bei einer kleineren Höhe der Fahrtrichtung des Kraftfahrzeugs (1) gegenüber der Höhe der vorausfahrenden und/oder entgegenkommenden Fahrzeuge (2), d.h. bei einer Höhendifferenz oder einem Höhenwinkel kleiner Null, das Steuergerät Steuersignale für die Hauptscheinwerfer zum Einstellen der horizontalen Hell-Dunkel-Grenze an der zweiten Schnittstelle bereitstellt, die die Hauptscheinwerfer zum Anheben der horizontalen Hell-Dunkel-Grenze gegenüber einer Position der Hell-Dunkel-Grenze bei einer Höhendifferenz oder einem Höhenwinkel gleich Null ansteuern.

4. Steuergerät nach einem der Ansprüche 1 bis 3, **dadurch gekennzeichnet, dass** das Steuergerät geeignet und eingerichtet Informationen über die Geschwindigkeit des Kraftfahrzeugs (1) einzulesen oder aus eingelesenen Informationen zu ermitteln.

5. Steuergerät nach Anspruch 4, **dadurch gekennzeichnet, dass** das Steuergerät geeignet und eingerichtet ist in Abhängigkeit von der Geschwindigkeit des Kraftfahrzeugs (1) die Steuersignale für die Hauptscheinwerfer zum Einstellen der horizontale Hell-Dunkel-Grenze zu erzeugen und an der zweiten Schnittstelle bereitzustellen.

6. Steuergerät nach einem der Ansprüche 1 bis 5, **dadurch gekennzeichnet, dass** das Steuergerät geeignet und eingerichtet, Informationen über die Geschwindigkeit der vorausfahrenden und/oder entgegenkommenden Fahrzeuge (2) einzulesen oder aus eingelesenen Informationen zu ermitteln.

7. Steuergerät nach Anspruch 6, **dadurch gekennzeichnet, dass** das Steuergerät geeignet und eingerichtet ist, in Abhängigkeit von der Geschwindigkeit der vorausfahrenden und/oder entgegenkommenden Fahrzeuge (2) die Steuersignale für die Hauptscheinwerfer zum Einstellen der horizontale Hell-Dunkel-Grenze zu erzeugen und an der zweiten Schnittstelle bereitzustellen.

8. Steuergerät nach einem der Ansprüche 1 bis 7, **dadurch gekennzeichnet, dass** das Steuergerät geeignet und eingerichtet, Informationen über einen horizontalen Versatz der vorausfahrenden und/oder entgegenkommenden Fahrzeuge (2) gegenüber der Fahrtrichtung des Kraftfahrzeugs (1) einzulesen oder aus eingelesenen Informationen zu ermitteln.

9. Steuergerät nach Anspruch 7, **dadurch gekennzeichnet, dass** das Steuergerät geeignet und eingerichtet ist, in Abhängigkeit von dem horizontalen Versatz die Steuersignale für die Hauptscheinwerfer zum Einstellen der horizontale Hell-Dunkel-Grenze zu erzeugen und an der zweiten Schnittstelle bereitzustellen.

10. Steuergerät nach einem der Ansprüche 1 bis 9, **dadurch gekennzeichnet, dass** das Steuergerät geeignet und eingerichtet ist, Werte für die Steuersignale mittels in einem Speicher des Steuergeräts abgelegter Kennlinien oder Kennfelder zu ermitteln.

11. Steuergerät nach einem der Ansprüche 1 bis 9, **dadurch gekennzeichnet, dass** das Steuergerät geeignet und eingerichtet ist, Informationen über die aktuellen Einstellungen der Hauptscheinwerfer einzulesen.

12. Steuergerät nach einem der Ansprüche 1 bis 9 oder nach Anspruch 11, **dadurch gekennzeichnet, dass** das Steuergerät geeignet und eingerichtet ist, die Werte für die Steuersignale aus den eingelesenen oder ermittelten Werten für die Höhendifferenz oder den Höhenwinkel unter Berücksichtigung der Geschwindigkeit des Kraftfahrzeugs (1), der Geschwindigkeiten der vorausfahrenden und/oder entgegenkommenden Fahrzeuge (2), des horizontalen Versatzes und/oder der aktuellen Einstellungen der Hauptscheinwerfer zu berechnen.

13. Steuergerät nach einem der Ansprüche 10 oder 12, **dadurch gekennzeichnet, dass** das Steuergerät die Werte für die Steuersignale in Abhängigkeit von einer eingestellten Lichtverteilung ermittelt bzw. berechnet.

14. Steuergerät nach einem der Ansprüche 1 bis 13, **dadurch gekennzeichnet, dass** das Steuergerät geeignet und eingerichtet ist, mit den von ihm erzeugten Steuersignalen Werte für die Leistung, die Ausrichtung, die Leuchtmittel, Blenden, die Ausrichtung von Spiegel, Linsen oder anderem der Hauptscheinwerfer zum Einstellen der horizontalen Hell-Dunkel-Grenze an der zweiten Schnittstelle bereitzustellen.
